# EUROPÄISCHE PATENTANMELDUNG

(11) **EP 3 037 881 A1**
(43) Veröffentlichungstag der Anmeldung: **29.06.2016**
(21) Anmeldenummer: 16000248.1
(22) Anmeldetag: 31.10.2012
(51) Int. Cl.: G03F 7/16

(54) **DOSIERVORRICHTUNG ZUM HANDGESTEUERTEN DOSIEREN EINES LICHTAUSHÄRTENDEN MATERIALS, SET UND VERFAHREN**

(30) Priorität: 02.11.2011 DE 102011117405
(62) Teilanmeldung aus: 12791691.4
(71) Anmelder: Viering, Anke Elisabeth, 81737 München (DE)
(72) Erfinder: Offermann, Thomas, 39057 Eppan (IT)
(74) Vertreter: Schlotter, Alexander Carolus Paul

(57) **Zusammenfassung**

Die Erfindung betrifft eine Dosiervorrichtung (100), zum handgesteuerten Dosieren eines in der Dosiervorrichtung (100) enthaltenen lichtaushärtenden Materials, aufweisend wenigstens ein zumindest in Abschnitten hiervon verformbares Reservoir (1), in welchem das lichtaushärtende Material vorliegt und eine Dosiereinrichtung (3) zum Ausbringen des lichtaushärtenden Materials. Die Erfindung betrifft ferner ein Set sowie ein Verfahren

## Beschreibung

Die vorliegende Erfindung betrifft eine Dosiervorrichtung zum handgesteuerten Dosieren eines lichtaushärtenden Materials gemäß Anspruch 1. Sie betrifft ferner ein Set gemäß Anspruch 10 sowie ein Verfahren gemäß Anspruch 19.

Mittels einer Dosiervorrichtung werden Materialien unterschiedlicher Viskositäten für verschiedene Zwecke dosiert. Die Materialien können flüssig, zähflüssig, pastenförmig usw. sein. Die Dosiervorrichtung kann je nach Anwendung und Einsatzzweck vollautomatisiert, teilautomatisiert oder manuell bedient werden.

Eine Aufgabe der vorliegenden Erfindung ist es, eine weitere Dosiervorrichtung vorzuschlagen. Ferner sollen ein Set mit wenigstens einer solchen Dosiervorrichtung und einem Gehäuse vorgeschlagen werden. Zudem soll ein Verfahren zum Ausbringen eines Dosiermediums und/oder zum Aushärten von lichtaushärtendem Material angegeben werden.

Die erfindungsgemäße Aufgabe wird durch eine Dosiervorrichtung mit den Merkmalen des Anspruchs 1 gelöst. Sie wird ferner gelöst durch ein Set mit den Merkmalen des Anspruchs 10 sowie ein Verfahren mit den Merkmalen des Anspruchs 18.

Erfindungsgemäß wird somit eine Dosiervorrichtung zum handgesteuerten Dosieren - oder zum Dosieren mittels Druck mit dem Finger - eines in der Dosiervorrichtung enthaltenen lichtaushärtenden Materials vorgeschlagen. Die Dosiervorrichtung weist wenigstens ein in Abschnitten hiervon verformbares, insbesondere manuell verformbares, Reservoir auf, welches das lichtaushärtende Material beinhaltet. Die Dosiervorrichtung weist weiterhin eine Dosiereinrichtung auf, welche vom lichtaushärtenden Material bei dessen Ausbringen zu durchströmen ist.

Das erfindungsgemäße Set weist wenigstens eine erfindungsgemäße Dosiervorrichtung und wenigstens ein Gehäuse auf. Das Gehäuse ist vorbereitet, beispielsweise durch Vorsehen einer geeigneten Vorrichtung, zum lösbaren Aufnehmen der Dosiervorrichtung am Gehäuse.

Das erfindungsgemäße Verfahren dient dem Ausbringen und/oder dem Aushärten von lichtaushärtendem Material unter Verwendung der Dosiervorrichtung.

Bei allen folgenden Ausführungen ist der Gebrauch des Ausdrucks "kann sein" bzw. "kann haben" usw. synonym zu "ist vorzugsweise" bzw. "hat vorzugsweise" usw. zu verstehen und soll eine erfindungsgemäße Ausführungsform erläutern.

Weiterentwicklungen der vorliegenden Erfindung sind jeweils Gegenstand von Unteransprüchen und Ausführungsformen.

Erfindungsgemäße Ausführungsformen können eines oder mehrere der im Folgenden genannten Merkmale aufweisen.

In bestimmten erfindungsgemäßen Ausführungsformen weist die Dosiereinrichtung einen Dosierkanal auf, durch welchen hindurch das lichtaushärtende Materials ausgebracht oder aufgetragen wird. Dabei ist die Dosiereinrichtung - insbesondere oder vorzugsweise ganz oder im Wesentlichen - aus einem ersten Material hergestellt oder weist ein erstes Material auf, wohingehend der Dosierkanal - insbesondere vorzugsweise ganz oder im Wesentlichen - aus einem zweiten Material hergestellt ist oder ein solches aufweist. Das zweite Material unterscheidet sich vom ersten Material.

Das Reservoir ist in bestimmten erfindungsgemäßen Ausführungsformen als Behältnis oder als Kartusche ausgestaltet.

In manchen erfindungsgemäßen Ausführungsformen ist der Dosierkanal aus einem metallischen Werkstoff oder einer Legierung hergestellt ist oder weist eine(n) solchen auf.

In bestimmten erfindungsgemäßen Ausführungsformen ist die Dosiereinrichtung lösbar mit der Dosiervorrichtung verbunden.

In einigen erfindungsgemäßen Ausführungsformen ist die Dosiereinrichtung mit der Dosiervorrichtung mittels eines Gewindes verbunden, wobei die Dosiereinrichtung und die Dosiervorrichtung jeweils einen Anteil oder Anteil des gemeinsamen Gewindes tragen.

In manchen erfindungsgemäßen Ausführungsformen weist die Dosiervorrichtung eine Dichteinrichtung, z. B. einen Dichtring, beispielsweise in Gestalt eines O-Rings, auf. Mittels der Dichteinrichtung ist es vorteilhaft möglich, eine Abdichtung zwischen der Dosiervorrichtung oder dem Reservoir einerseits und der Dichteinrichtung andererseits gegenüber einem Äußeren zu erzielen.

In bestimmten erfindungsgemäßen Ausführungsformen ist die Dosiereinrichtung aus einem gegenüber der Dosiervorrichtung härteren Material hergestellt oder weist zumindest ein härteres Material auf. Diese Ausgestaltung kann in einigen erfindungsgemäßen Ausführungsformen vorteilhaft dazu beitragen oder gewährleisten, die Dichtigkeit zwischen Dosiereinrichtung und Dosiervorrichtung auch bei erfolgender elastischer Verformung der Dosiereinrichtung, beispielsweisweise bei Ausüben von Druck hierauf, aufrecht zu erhalten.

In manchen erfindungsgemäßen Ausführungsformen ist das Gehäuse des Sets aus demselben Material (z. B. Polyethylen (PE)) wie das Reservoir selbst oder weist ein solches auf.

In bestimmten erfindungsgemäßen Ausführungsformen ist das Reservoir mit einer anderen Substanz als einem lichtaushärtenden Material befüllt oder zur Befüllung vorgesehen, etwa mit einem Öl, einem Lebensmittel, einer Farbe oder einem Farbgemisch, einem Lack oder einem Lackgemisch oder pastösen Materialien jeder Art. In diesen Ausführungsformen ist der Begriff "lichtaushärtendes Material", so wie er an beliebiger Stelle hierin verwendet ist, auch auf die vorgenannten Substanzen auszuweiten. In diesen Ausführungsformen ist der Begriff "lichtaushärtendes Material", so wie er an beliebiger Stelle hierin verwendet ist, als Synonym für die vorgenannten Substanzen zu verstehen.

In manchen erfindungsgemäßen Ausführungsformen ist das Reservoir transparent oder hat wenigstens einen transparenten Abschnitt. Dies erlaubt vorteilhaft eine optische Kontrolle des Füllzustandes des Reservoirs.

In bestimmten erfindungsgemäßen Ausführungsformen ist die lichtemittierende Einrichtung fest im Gehäuse integriert. In anderen erfindungsgemäßen Ausführungsformen weist das Set wenigstens einen Lichtleiter (Glasfaser, etc...) auf, welcher das Licht von der lichtemittierende Einrichtung (welche in einem hinteren Abschnitt des Sets angeordnet ist) zur Dosiereinrichtung oder in Nähe einer Austrittöffnung hiervon (vorne im Set angeordnet) führt.

In gewissen erfindungsgemäßen Ausführungsformen wird der Betrieb der lichtemittierenden Einrichtung mittels eines Druckknopfs begonnen.

In manchen erfindungsgemäßen Ausführungsformen ist das Gehäuse des Sets aus einem Metall (Aluminium, Edelstahl, Titan etc.) gefertigt oder weist ein solches auf.

In bestimmten erfindungsgemäßen Ausführungsformen ist zur Erhöhung des Drucks innerhalb des Reservoirs eine interne Gaspatrone und/oder eine andere Einrichtung zum Aufbauen von Druck vorgesehen. Dies kann vorteilhaft ein umfassenderes Leeren des Reservoirs begünstigen. Ferner kann dies ein Arbeiten mit dem erfindungsgemäßen Set auch über Kopf erlauben.

In manchen erfindungsgemäßen Ausführungsformen weist das Reservoir in wenigstens einem Bereich hiervon und/oder in seiner Mantelfläche, oder in einem Hauptbereich jeweils hiervon, eine Wandstärke in einem Bereich von 0,75 bis 1,25 mm, vorzugsweise von 0,9 bis 1,1 mm, wiederum bevorzugt in einem Bereich von 0,95 bis 1,05 mm, auf. Diese Bereiche haben sich als besonders geeignet erwiesen, was die gewünschte Verformbarkeit und die erforderliche Beständigkeit und Belastbarkeit betrifft.

In bestimmten erfindungsgemäßen Ausführungsformen weist die Dosiervorrichtung lichtaushärtbares Material auf, welches mittels Strahlung in einem Bereich von 380 bis 500 Nanometer (nm), insbesondere im Bereich von 450 bis 480 nm, insbesondere bei 470 nm, und insbesondere in einem Bereich von 390 bis 410 nm, insbesondere bei 405 nm aushärtet.

In manchen erfindungsgemäßen Ausführungsformen ist das Reservoir aus einem lichtundurchlässigen Material hergestellt. Das lichtundurchlässige Material ist vorzugsweise, wenigstens oder insbesondere lichtundurchlässig für einen Strahlungsbereich von 380 bis 500 Nanometer (nm), insbesondere im Bereich von 450 bis 480 nm, insbesondere bei 470 nm, und insbesondere in einem Bereich von 390 bis 410 nm, insbesondere bei 405 nm.

In bestimmten erfindungsgemäßen Ausführungsformen weist die Dosiereinrichtung und/oder der Dosierkanal einen lösbaren, Verschluss gegenüber einem Äußern (also der Umgebung) auf. In manchen erfindungsgemäßen Ausgestaltungen ist der Verschluss eine Verschlusskappe.

Der Verschluss ist in einigen erfindungsgemäßen Ausführungsformen lichtundurchlässig, vorzugsweise für einen Strahlungsbereich von 380 bis 500 Nanometer (nm), insbesondere im Bereich von 450 bis 480 nm, insbesondere bei 470 nm, und insbesondere in einem Bereich von 390 bis 410 nm, insbesondere bei 405 nm.

In bestimmten erfindungsgemäßen Ausführungsformen sind der Dosierkanal und die lichtemittierende Einrichtung an zwei gegenüberliegenden Endbereichen des Sets oder der Dosiervorrichtung ausgestaltet oder vorgesehen. Durch ein einfaches Umdrehen des Sets oder der Dosiervorrichtung ist es ohne Handwechsel möglich, mit nur einer Hand sowohl das lichtaushärtende Material auszubringen als auch mittels der lichtemittierenden Einrichtung auszuhärten.

In manchen erfindungsgemäßen Ausführungsformen ist die lichtemittierende Einrichtung zum Aushärten des lichtaushärtenden Materials eine LED-Lampe und/oder eine Blitzlichtvorrichtung oder weist dergleichen auf.

In bestimmten erfindungsgemäßen Ausführungsformen ist das Gehäuse ausgestaltet, um die lichtemittierende Einrichtung lösbar aufzunehmen. Dies kann beispielsweise durch Einstecken, Einraste, Verklemmen oder dergleichen erfolgen. Das Gehäuse kann entsprechend vorbereitet sein.

In gewissen erfindungsgemäßen Ausführungsformen weisen das Gehäuse und die Dosiervorrichtung, insbesondere die Dosiereinrichtung der Dosiervorrichtung, einen Bajonettverschluss oder einander entsprechende Teile eines Bajonettverschlusses zur lösbaren Aufnahme der Dosiervorrichtung im oder am Gehäuse auf.

In bestimmten erfindungsgemäßen Ausführungsformen weist das Gehäuse wenigstens eine Öffnung zum handgesteuerten Dosieren des lichtaushärtenden Materials auf, indem mittels Finger des Benutzers mittels der einen oder mehreren Öffnungen durch das Gehäuse oder seine Wandung hindurch das Reservoir von außerhalb des Gehäuses berührt und hierauf geeigneter Druck ausgeübt werden kann.

Hierzu weist das Gehäuse in gewissen erfindungsgemäßen Ausführungsformen zwei, sich vorzugsweise gegenüberliegende, Öffnungen auf, in anderen erfindungsgemäßen Ausführungsformen sind dies mehr als zwei Öffnungen.

In manchen erfindungsgemäßen Ausführungsformen liegt die wenigstens eine Öffnung in einer Mantelfläche des Gehäuses.

In bestimmten erfindungsgemäßen Ausführungsformen liegt die wenigstens einen Öffnung nicht in einer Stirnfläche hiervon.

Was hierin zu einer Öffnung ausgeführt ist, trifft in bestimmten erfindungsgemäßen Ausführungsformen auf zwei, drei oder mehr oder alle vorhandenen Öffnungen zu.

In gewissen erfindungsgemäßen Ausführungsformen weist wenigstens eine der Öffnungen eine Längsrichtung und eine hierzu senkrechte Querrichtung auf, wobei sich die Öffnung in Längsrichtung über eine weitere Distanz innerhalb der Wandung des Gehäuses erstreckt als in Querrichtung, oder umgekehrt.

In bestimmten erfindungsgemäßen Ausführungsformen weist die Öffnung in Umfangsrichtung wenigstens zwei unterschiedlich weite Abschnitte auf. Eine derartige Öffnung ist somit an einer Stelle breiter (in Umfangsrichtung des Gehäuses) als an anderer Stelle.

In manchen erfindungsgemäßen Ausführungsformen weist die Dosiervorrichtung oder das Gehäuse eine Vorrichtung auf zum lösbaren Aufnehmen der lichtemittierende Einrichtung. Diese Vorrichtung ist in einigen erfindungsgemäßen Ausführungsformen als eine Schnappvorrichtung ausgestaltet. In anderen erfindungsgemäßen Ausführungsformen ist diese Vorrichtung als eine Steckvorrichtung und dergleichen ausgestaltet.

In manchen erfindungsgemäßen Ausführungsformen weist die lichtemittierende Einrichtung einen Schalter auf, mittels welchem sie in einen Daueremittierbetrieb versetzt werden kann.

In bestimmten erfindungsgemäßen Ausführungsformen weist die lichtemittierende Einrichtung eine Einrichtung auf, mittels welcher sie durch Druck hierauf in einen Emittierbetrieb versetzt werden kann, welcher nur für die Zeitdauer besteht, in welcher der Druck hierauf besteht. Dies kann mittels eine Druckschalters mit Rückstelleinrichtung bewirkt werden.

In manchen Ausführungsformen umfasst das erfindungsgemäße Verfahren ein Wenden oder Drehen der Dosiervorrichtung nach Auftragen von lichtaushärtendem Material durch die Dosiereinrichtung hindurch um eine Querachse der Dosiervorrichtung zum Aushärten des aufgetragenen Materials mittels der an der Dosiereinrichtung angeordneten lichtemittierenden Einrichtung.

Beliebige erfindungsgemäße Ausführungsformen können einen beliebige oder mehrere beliebige der folgenden Vorteile aufweisen oder bieten.

So besteht ein Vorteil in der Austauschbarkeit verbrauchter oder durch Benutzung geleerter Dosiervorrichtungen, deren Reservoir nicht mehr genügend lichtaushärtendes Material aufweist. Das Set, das Gehäuse und alle übrigen Komponenten können beibehalten und weiterhin benutzt werden. Allein das Reservoir oder die Dosiervorrichtung gilt es auszutauschen. Dies senkt vorteilhaft die Materialkosten, die Entsorgungskosten, den Bedarf an Lagerraum und dergleichen. Dabei kann aufgrund der Trennbarkeit von Reservoir und Dosiereinrichtung in einigen erfindungsgemäßen Ausführungsformen selbst die Dosiereinrichtung weiter verwendet werden.

Der hierin für manche erfindungsgemäße Ausführungsformen vorgeschlagene Bajonettverschluss hat sich als besondern geeignet erwiesen, um eine schnelle, einfache und zuverlässige Austauschbarkeit zu gewähren.

In einer Anzahl der erfindungsgemäßen Ausführungsformen sind unterschiedliche Komponenten aus verschiedenen Materialien gefertigt oder weisen solche auf. Hierdurch kann vorteilhaft ein weiterer Beitrag zur Dichtigkeit der Dosiervorrichtung gegenüber einem Äußeren geleistet werden.

Eine Dichtigkeit zwischen den einzelnen Komponenten wird erfindungsgemäß und vorteilhaft erzielt mit den hierin vorgeschlagenen Dichteinrichtungen.

Das Vorsehen unterschiedlicher Materialien kann ferner vorteilhaft erlauben, die verschiedenen Komponenten des Sets unabhängig voneinander mit Blick auf ihre jeweilige Funktion auf die jeweils kostengünstigste Weise herzustellen.

Die vorliegende Erfindung wird im Folgenden anhand der beigefügten Zeichnungen, in welcher identische Bezugszeichen gleiche oder ähnliche Bauteile bezeichnen, exemplarisch erläutert. In den Figuren gilt:
- **Fig. 1**: zeigt eine erfindungsgemäße Dosiervorrichtung in einem Längsschnitt;
- **Fig. 2**: zeigt eine erfindungsgemäße Dosiereinrichtung und einen Verschluss in Halbschnittdarstellung in Richtung der Längsachse und in Projektion als Vorderansicht; und
- **Fig. 3 a,b**: zeigen ein erfindungsgemäßes Set mit der Dosiervorrichtung, einem Verschluss für einen Dosierkanal, einer LED-Lampe und einem Gehäuse.

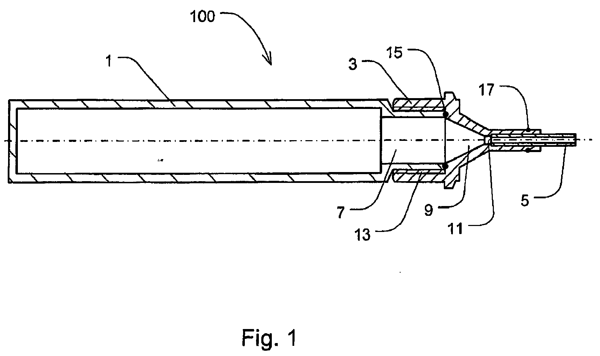

**Fig. 1** zeigt eine erfindungsgemäße Dosiervorrichtung 100 in Schnittdarstellung in Richtung der strich-punktierten Längsachse mit einem Reservoir 1, einer Dosiereinrichtung 3 und einem Dosierkanal 5.

Das Reservoir 1 weist lichtaushärtendes Material (hier nicht dargestellt) auf. Bei einer Druckaufbringung auf das Reservoir 1, zum Beispiel durch manuellen Druck mit dem Finger von außen auf das verformbare Reservoir 1, wird das lichtaushärtende Material durch die Verengung 7 des Reservoirs 1 in die Dosiereinrichtung 3 hinein gefördert oder gepresst. In der Dosiereinrichtung 3 wird das Material weiter durch einen kegelförmigen Abschnitt, kurz: Kegel 9, in die Austrittsöffnung 11 der Dosiereinrichtung 3 gefördert.

Der Dosierkanal 5 ist in die Austrittsöffnung 11 der Dosiereinrichtung 3 bis gegen einen Absatz eingeschoben. Der Dosierkanal 5 kann auf geeignete Weise fixiert sein. Die Fixierung kann beispielsweise in Form einer Presspassung, einer Verrastung und/oder eine Klebung erfolgen.

Der Dosierkanal 5 kann aus Metall oder einer Legierung hergestellt sein. Er weist exemplarisch die folgenden Abmaße auf: Innendurchmesser 0,8 mm, Außendurchmesser 1,2 mm, Länge beispielsweise ca. 12 mm.

Das Reservoir 1 ist in diesem Ausführungsbeispiel aus einem ersten Material, z.B. einem weichen Polyethylen (zum Beispiel LDPE - low density polyethylene) - hergestellt oder weist ein solches auf. Die Dosiereinrichtung ist aus einem dritten Material -z.B. einem härteren Polymer, jedenfalls aber einem relativ zum ersten Material härteren Material - ausgestaltet oder weist ein solches auf.

Sowohl das erste als auch das dritte Material werden derart ausgewählt (oder bearbeitet, z. B. durch schwarze oder andersartige Beschichtung oder Färbung), dass sie - vorzugsweise, wenigstens oder insbesondere in einem Lichtwellenlängenbereich von 380 bis 500 Nanometer (nm) - lichtundurchlässig sind, um das lichtaushärtbare Material des Reservoirs 1 und der Dosiereinrichtung 3 gegen ungewolltes Aushärten durch Lichteinwirkung zu bewahren.

Die Verbindung zwischen dem Reservoir 1 und der Dosiereinrichtung 3 ist exemplarisch durch ein Gewinde 13 ausgeführt, zum Beispiel durch ein Gewinde M10x1. Alternativ kann die Verbindung auch beispielsweise mittels Verkleben, Aufstecken usw. bewirkt werden.

Zum weiteren Abdichten, und um ggf. auch zu verhindern, dass sich aufgrund des weichen ersten Materials des Reservoirs 1 auch die Wandung der Verengung 7 bei einer Druckaufbringung auf das Reservoir 1 verformt, wird in der hier gezeigten Ausführungsform ein Dichtungsring 15 (z. B. O-Ring aus Polymer) zur Abdichtung des Reservoirs 1 im Bereich des Gewindes 13 in die Dosiereinrichtung 3 eingesetzt. Durch das - insbesondere vollständige - Aufschrauben der Dosiereinrichtung 3 auf das Gewinde 13 des Reservoirs 1 wird mittels des Dichtungsrings 15 die Verbindung zwischen diesen beiden Bauteilen gegenüber einem Äußeren abgedichtet.

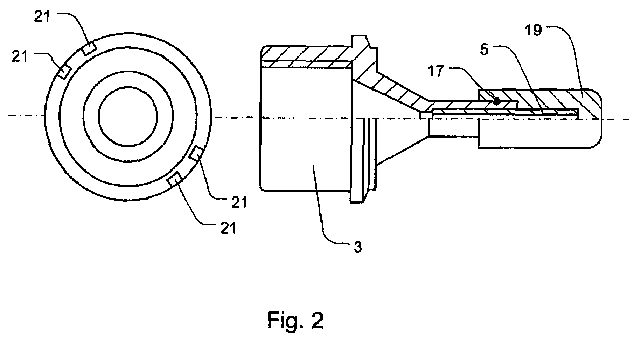

Ein weiterer, optional vorgesehener Dichtungsring 17 dichtet zwischen der Dosiereinrichtung 3 und einem Verschluss 19 gegenüber dem Äußeren (siehe Figur 2) ab. Zusätzlich kann dieser weitere Dichtring 17 ausgestaltet sein, den aufgeschobenen Verschluss 19 auf der Dosiereinrichtung 3 zu fixieren.

**Fig. 2** zeigt die erfindungsgemäße Dosiereinrichtung 3 mit dem Dosierkanal 5 und dem Verschluss 19 in Halbschnittdarstellung in Richtung der Längsachse oder in einer Ebene, in welcher die Längsachse liegt (rechtes Bild in Figur 2) und in Projektion als Vorderansicht (linkes Bild in Figur 2, mit Verschluss 19).

Das Material des Verschlusses ist optional oder vorzugsweise ebenfalls lichtundurchlässig, insbesondere in einem Lichtwellenlängenbereich von 380 bis 500 Nanometer (nm), um das lichtaushärtbare Material im Dosierkanal 5, insbesondere am Austritt des Dosierkanals 5 gegen ungewolltes Aushärten durch Lichteinwirkung zu schützen.

Der weitere Dichtungsring 17 dichtet wie oben ausgeführt die Dosiereinrichtung 3 gegen den Verschluss 19 ab und/oder fixiert den aufgeschobenen Verschluss 19 auf der Dosiereinrichtung 3.

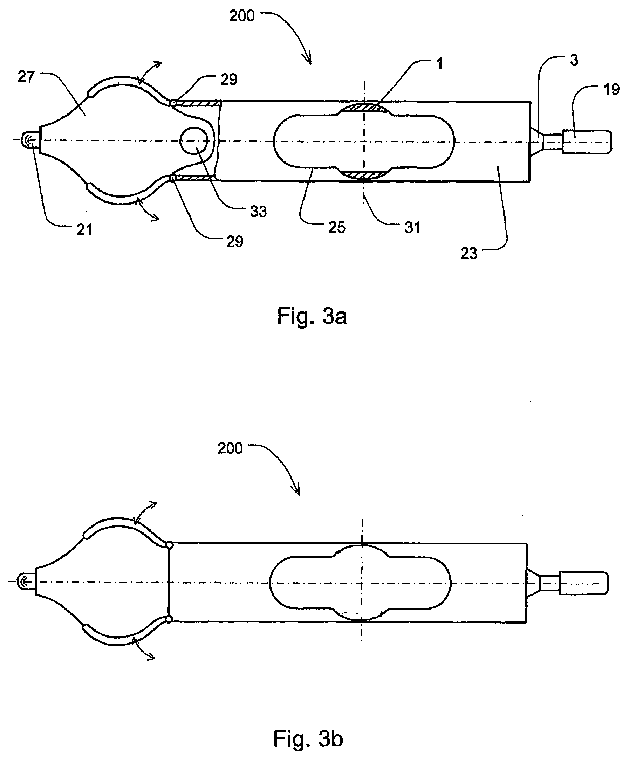

In der Vorderansicht (linkes Bild in Figur 2) sind vier Aussparungen 21 am äußeren Ring der Dosiereinrichtung 3 dargestellt. Diese Aussparungen 21 sind Teile eines Bajonettverschlusses zur optional möglichen Fixierung des Reservoirs 1 mit der Dosiereinrichtung 3 in einem Gehäuse 23 (siehe Figur 3).

**Fig. 3** **a,b** zeigen ein erfindungsgemäßes Set 200 mit der Dosiervorrichtung 3, dem Verschluss 19 für den Dosierkanal 5, einer LED-Lampe 21 als lichtemittierender Einrichtung und dem Gehäuse 23.

Das Reservoir 1 für das lichtaushärtende Material wird in dieser Darstellung nur ausschnittsweise innerhalb des Gehäuses 23 gezeigt.

Zur Druckaufbringung des Reservoirs 1 zum Fördern bzw. Auspressen des lichtaushärtenden Materials aus dem Reservoir 1 in die Dosiereinrichtung 3 und zum Austrag aus dem Dosierkanal 5 (in Figur 3 a,b nicht gezeigt) bei einem geöffneten bzw. abgezogenen Verschluss 19 ist im Gehäuse 23 eine Öffnung 25 eingebracht. Auf der gegenüberliegenden, hinteren (in Figur 3 a,b nicht sichtbar) Seite des Gehäuses 23 kann wenigstens eine, vorzugsweise zur Öffnung 25 identische oder vergleichbare, weitere (z.B. zweite) Öffnung vorgesehen sein. Durch diese Öffnung(en) kann ein manueller Druck, vorzugsweise durch jeweils einen Finger aufgebracht, auf das Reservoir 1 zur Ausbringung des lichtaushärtenden Materials ausgeübt werden.

Wie in Fig. 3a und 3b gezeigt, weist die Öffnung 25 eine Erstreckung in Längsrichtung hiervon, welche sich in Längsrichtung der Dosiervorrichtung 100 erstreckt, und eine hierzu senkrechte Erstreckung in Querrichtung auf, welche sich senkrecht hierzu oder in Umfangsrichtung der Dosiervorrichtung 100 entlang der Querachse oder entlang des Umfangs der Dosiervorrichtung 100 erstreckt. Dabei erstreckt sich die Öffnung 25 in Längsrichtung weiter als in Querrichtung. Das Gehäuse 23 oder seine Wandung ist somit aufgrund der bezogen auf die Längsrichtung und die Quer- oder Umfangsrichtung unterschiedlich weiten Erstreckungen unterschiedlich weit geöffnet oder durchbrochen. Dies erlaubt ein für unterschiedliche Größen der Finger des Benutzers jeweils ergonomisches Hindurchgreifen auf das Reservoir bei zugleich ausreichend stabiler Gestaltung des Gehäuses 23.

Nach seinem Ausbringen kann das lichtaushärtende Material durch Licht, in diesem Ausführungsbeispiel durch LED-Licht im Lichtwellenlängenbereich zwischen 390 und 405 Nanometer (nm), ausgehärtet werden. Dieses LED-Licht wird durch die LED-Lampe 21 bereitgestellt, welche lösbar oder unlösbar in einer LED-Lampenfassung 27 aufgenommen ist.

Die LED-Lampenfassung 27 weist zusätzlich zur LED-Lampe eine Batterie, ein Gehäuse, ein Druckschalter zum manuellen Aktivieren der LED-Lampe und weitere mechanische und elektronische Elemente auf. Es kann in der Lampenfassung 27 zudem ein aktivierbares Bauteil zum Einschalten eines Dauerbetriebs der LED-Lampe in der LED-Lampenfassung 27 enthalten sein.

Die LED-Lampenfassung 27 mit der LED-Lampe 21 ist ein eigenständiges Bauteil, das in das Gehäuse 23 eingesteckt werden kann. Dies hat den Vorteil, dass alle für den Arbeitsgang der Verwendung des lichtaushärtenden Materials erforderlichen Komponenten gemeinsam in einem kompakten Set 200 verfügbar sind und beispielsweise leicht transportiert werden können.

Die LED-Lampenfassung 27 wird mittels einer Schnappvorrichtung mit zwei Federelementen 29, die in Richtung der angegebenen Pfeile auseinandergebogen oder geöffnet werden können, mit dem Gehäuse 23 lösbar verbunden, z.B. durch Einstecken. Die LED-Lampenfassung 27 kann beispielsweise durch einfaches Herausziehen aus dieser Schnappvorrichtung entnommen werden. Ebenso ist es möglich, die LED-Lampenfassung 27 in der Schnappvorrichtung eingesteckt zu lassen und zum Aktivieren des lichtaushärtenden Materials das gesamte Gehäuse 23 (beispielsweise um die Querachse 31) zu drehen und anschließend das Material mittels der eingeschalteten LED-Lampe 21 auszuhärten.

Mittels der Öffnung 33 der LED-Lampenfassung kann die LED-Lampenfassung beispielsweise fixiert oder aufgehängt werden, um den Aushärtevorgang gegebenenfalls zu erleichtern.

**Bezugszeichenliste**

| **Bezugszeichen** | **Beschreibung** |
|---|---|
| 100 | Dosiervorrichtung |
| 200 | Set |
| 1 | Reservoir |
| 3 | Dosiereinrichtung |
| 5 | Dosierkanal |
| 7 | Verengung des Reservoirs |
| 9 | Kegel der Dosiereinrichtung |
| 11 | Austrittsöffnung der Dosiereinrichtung |
| 13 | Gewinde |
| 15 | Dichtungsring zwischen Dosiereinrichtung und Reservoir |
| 17 | Dichtungsring zwischen Dosiereinrichtung und Verschluss |
| 19 | Verschluss |
| 21 | LED-Lampe |
| 23 | Gehäuse |
| 25 | Öffnung des Gehäuses |
| 27 | LED-Lampenfassung |
| 29 | Federelement |
| 31 | Querachse |
| 33 | Öffnung der LED-Lampenfassung |
| | |
| | |
| | |
| | |
| | |
| | |
| | |
| | |

## Patentansprüche

1. Dosiervorrichtung (100), zum handgesteuerten Dosieren eines in der Dosiervorrichtung (100) enthaltenen lichtaushärtenden Materials, aufweisend
- wenigstens ein zumindest in Abschnitten hiervon verformbares Reservoir (1), in welchem das lichtaushärtende Material vorliegt;
- weiterhin eine Dosiereinrichtung (3) zum Ausbringen des lichtaushärtenden Materials.

2. Dosiervorrichtung (100) nach Anspruch 1, wobei die Dosiereinrichtung (3) einen, insbesondere aus einem metallischen Werkstoff hergestellten oder einen solchen aufweisenden, Dosierkanal (5) zum Ausbringen des lichtaushärtenden Materials aufweist, wobei die Dosiereinrichtung (3) aus einem ersten Material hergestellt ist oder ein erstes Material aufweist, und wobei der Dosierkanal (5) aus einem zweiten Material hergestellt ist oder ein solches aufweist.

3. Dosiervorrichtung (100) nach einem der vorangegangenen Ansprüchen, wobei die Dosiereinrichtung (3) lösbar mit der Dosiervorrichtung (100) verbunden ist; und/oder wobei die Dosiereinrichtung (3) mit der Dosiervorrichtung (100) mittels eines Gewindes (13) verbunden ist.

4. Dosiervorrichtung (100) nach einem der vorangegangenen Ansprüchen, wobei die Dosiereinrichtung (3) aus einem gegenüber der Dosiervorrichtung (100) härteren Material hergestellt wird oder zumindest ein härteres Material aufweist.

5. Dosiervorrichtung (100) nach einem der vorangegangenen Ansprüchen, wobei das Reservoir (1) in wenigstens einem Bereich hiervon eine Wandstärke in einem Bereich von 0,75 bis 1,25 mm, vorzugsweise von 0,9 bis 1,1 mm, wiederum bevorzugt in einem Bereich von 0,95 bis 1,05 mm, aufweist; und/oder
wobei das Reservoir (1) lichtaushärtbares Material aufweist, welches in einem Bereich von 380 bis 500 Nanometer (nm), insbesondere im Bereich von 450 bis 480 nm, insbesondere bei 470 nm, und insbesondere in einem Bereich von 390 bis 410 nm, insbesondere bei 405 nm aushärtet; und/oder
wobei das Reservoir (1) aus einem lichtundurchlässigen Material hergestellt ist, welches insbesondere lichtundurchlässig ist für einen Strahlungsbereich von 380 bis 500 Nanometer (nm), insbesondere im Bereich von 450 bis 480 nm, insbesondere bei 470 nm, und insbesondere in einem Bereich von 390 bis 410 nm, insbesondere bei 405 nm.

6. Set (200), welches aufweist:
- wenigstens eine Dosiervorrichtung (100) gemäß einem der Ansprüche 1 bis 5,
- wenigstens ein, insbesondere wenigstens eine Öffnung zum handgesteuerten Dosieren des lichtaushärtenden Materials aufweisendes, Gehäuse (23) zum lösbaren Aufnehmen der Dosiervorrichtung (100).

7. Set (200) nach Anspruch 6, welches ferner aufweist:
- wenigstens eine lichtemittierende Einrichtung zum Aushärten des lichtaushärtenden Materials, insbesondere eine LED-Lampe (21) und/oder eine Blitzlichtvorrichtung, wobei das Gehäuse ausgestaltet ist, um auch die lichtemittierende Einrichtung lösbar hieran oder hierin aufzunehmen.

8. Set (200) nach Anspruch 6 oder 7, wobei die Dosiereinrichtung (3) und/oder der Dosierkanal (5) einen lösbaren Verschluss (19) aufweist.

9. Set (200) nach einem der Ansprüche 6 bis 8, bei welcher der Dosierkanal (5) und die lichtemittierende Einrichtung an zwei gegenüberliegenden Endbereichen des Sets (200) ausgestaltet oder vorgesehen sind.

10. Set (200) nach einem der Ansprüche 6 bis 9, wobei das Gehäuse (23) und die Dosiervorrichtung (100) zur lösbaren Aufnahme der Dosiervorrichtung (100) einen Bajonettverschluss aufweist.

11. Set (200) nach einem der Ansprüche 6 bis 10, wobei wenigstens eine der Öffnungen (25) eine Längsrichtung und eine hierzu senkrechte Querrichtung aufweist, wobei sich die Öffnung (25) zwei Abschnitten hiervon unterschiedlich weit in Querrichtung in das Gehäuse (23), dessen Mantel oder dessen Wandung hinein erstreckt.

12. Set (200) nach einem der Ansprüche 6 bis 11, wobei das Gehäuse (23) eine Vorrichtung zum lösbaren Aufnehmen der lichtemittierende Einrichtung aufweist.

13. Set (200) nach einem der Ansprüche 6 bis 12, wobei die lichtemittierende Einrichtung mittels eines hieran vorgesehenen Schalter in einen Daueremittierbetrieb versetzt werden kann.

14. Verfahren zum Ausbringen eines Dosiermediums und/oder zum Aushärten von lichtaushärtendem Material mit dem Schritt:
Verwenden einer Dosiervorrichtung (100) gemäß einem der Ansprüche 1 bis 5.

15. Verfahren nach Anspruch 14, mit wenigstens einem der Schritte:
Wenden oder Drehen der Dosiervorrichtung (100) nach Auftragen von lichtaushärtendem Material durch die Dosiereinrichtung (3) hindurch um eine Querachse (31) der Dosiervorrichtung (100) zum Aushärten des aufgetragenen Materials mittels der an der Dosiereinrichtung (100) angeordneten lichtemittierenden Einrichtung; und/oder
Befüllen des Reservoirs (1) mittels der Dosiervorrichtung (100).
